(19) Europäisches Patentamt / European Patent Office / Office européen des brevets

(11) **EP 3 265 773 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **16708139.7**

(22) Anmeldetag: **04.03.2016**

(51) Int Cl.:
*G01M 9/06* (2006.01)   *G01M 17/007* (2006.01)

(86) Internationale Anmeldenummer:
**PCT/EP2016/054609**

(87) Internationale Veröffentlichungsnummer:
**WO 2016/139326 (09.09.2016 Gazette 2016/36)**

(54) **HALTEVORRICHTUNG FÜR EINE WINDKANALWAAGE UND PRÜFVERFAHREN**

HOLDING DEVICE FOR A WIND TUNNEL BALANCE, AND TEST METHOD

DISPOSITIF DE RETENUE POUR UNE BALANCE AÉRODYNAMIQUE ET PROCÉDÉ D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2015 DE 102015204019**

(43) Veröffentlichungstag der Anmeldung:
**10.01.2018 Patentblatt 2018/02**

(73) Patentinhaber: **AIP GmbH & Co. KG**
**87490 Haldenwang (DE)**

(72) Erfinder:
• **HARTMANN, Christian**
**87452 Altusried (DE)**
• **KNESTEL, Anton**
**87496 Hopferbach (DE)**

(74) Vertreter: **MERH-IP Matias Erny Reichl Hoffmann**
**Patentanwälte PartG mbB**
**Paul-Heyse-Strasse 29**
**80336 München (DE)**

(56) Entgegenhaltungen:
EP-A2- 1 983 322   WO-A2-2010/117793
DE-A1-102011 085 640   DE-T5-112009 000 493
JP-A- 2006 170 639   US-A1- 2011 277 560
US-A1- 2014 208 839

**Beschreibung**

Die hier beschriebene Haltevorrichtung für eine Windkanalwaage und das dazugehörige Verfahren ermöglichen es, dass Kraftfahrzeuge sicher auf einer Windkanalwaage befestigt und positionsgetreu festgehalten werden können. Besonders hervorzuheben ist, dass die Haltevorrichtung es ermöglicht, dass die Unterbodenfreiheit des Kraftfahrzeuges eingestellt bzw. verändert werden kann, ohne dass dies zu Messwertverfälschungen führt. Das hier beschriebene Prüfverfahren erlaubt des Weiteren eine Elimination von für die Prüfung unterwünschten Messwerteinflüssen. Somit erlauben sowohl die hier beschriebene Haltevorrichtung als auch das Prüfverfahren, dass Kraftfahrzeuge mit höherer Präzision in einem Windkanalprüfstand getestet und geprüft werden können.

Während der Entwicklung von Kraftfahrzeugen, wie z.B. Personenkraftwagen oder auch Rennwagen, werden diese üblicherweise in Windkanälen auf ihre aerodynamischen Eigenschaften getestet. Zur Messung von Kräften, die bei diesen aerodynamischen Versuchen auf das Kraftfahrzeug wirken, werden Windkanalwaagen herangezogen.

Bekannte Windkanalwaagen weisen beispielsweise eine unterschiedliche Anzahl von Bandeinheiten auf und entsprechend wird bspw. zwischen Einband-, Dreiband und Fünfbandprüfständen unterschieden. Das Koordinatensystem der Prüfstände wird regelmäßig derart gewählt, dass die x-Achse in Laufrichtung eines Laufbandes des Prüfstandes/Windkanalwaage zeigt. Die y-Achse steht quer zum Laufband. Die z-Achse zeigt ausgehend von der Oberfläche eines Obertrums des Laufbandes weg vom Laufband. Dieses Koordinatensystem wird auch in den nachfolgend beschriebenen Figuren der hier beschriebenen Erfindung verwendet werden.

Die Prüfstände weisen üblicherweise eine Bandeinheit mit einem durchgehenden Laufband auf, das auf zwei Rollen bzw. Trommeln umläuft. Das Kraftfahrzeug wird für die aerodynamischen Prüfungen/Test mit seinen Rädern auf dem einen oder den mehreren Laufbändern positioniert und relativ zu dem Laufband/den Laufbändern mit einer Haltevorrichtung fixiert. Bekannte Haltevorrichtungen werden seitlich zum Laufband befestigt und verfügen über Arme, die von der seitlichen Befestigung über das/die Laufband/er greifen, um die Räder des Kraftfahrzeuges über dem Laufband in einer vorgegebenen Position festzuhalten. Andere Haltevorrichtungen weisen ferner Arme auf, die an der Karosserie des Kraftfahrzeuges angreifen. Zudem können Lager, die unterhalb des Obertrums des Laufbandes zwischen den Rollen angeordnet sind, eine Gewichtskraft des Kraftfahrzeuges erfassen. Die Lager können z.B. Wiegepads oder dgl. umfassen und jeweils unterhalb eines Kraftfahrzeugrades angeordnet sein, so dass durch das Band hindurch z-Kräfte erfasst werden können (man spricht in diesem Zusammenhang von einer Durchbandmessung).

Die oben bereits erwähnten, bekannten Haltevorrichtungen erlauben eine Einstellung der Unterbodenfreiheit des Kraftfahrzeuges gegenüber der Oberfläche des Laufbandes, auf dem das Kraftfahrzeug angeordnet ist. Dazu kann die Position der Arme der Haltevorrichtungen in der z-Richtung verändert werden. Beispielsweise können die seitlichen Befestigungen dazu über einen linear ausfahrbaren Aktuator verfügen. Eine Veränderung der Position der Arme in z-Richtung führt zu einem Anheben oder Absenken des Kraftfahrzeuges und somit bspw. zu einer veränderten Unterbodenfreiheit.

Nachteil dieser bekannten Haltevorrichtungen ist es jedoch, dass das Abheben oder Absenken der Arme zu einer Veränderung der auf dem Wiegepad erfassten Gewichtskraft führt. Insbesondere erfolgt entweder eine Kraftentlastung oder eine zusätzliche Kraft wird über das Federdämpfersystem und das Rad an das Wiegepad weitergeleitet. Die Messgenauigkeit wird aufgrund dieser "Scheinkräfte" reduziert bzw. die Messergebnisse der z-Krafterfassung werden verfälscht.

Folglich besteht Bedarf für eine Haltevorrichtung eines Windkanalprüfstandes und ein zugehöriges Prüfverfahren, die eine erhöhte Messgenauigkeit und - zuverlässigkeit, insbesondere bei der Erfassung von z-Kräften, ermöglichen.

US 2011/277560 A1 betrifft ein System zum Messen von Kräften, die an ein sich bewegendes Fahrzeug angelegt werden. Das System umfasst eine Sensorplatte, die konfiguriert ist, zwischen einem Rad und einer Nabe des Fahrzeugs montiert zu werden.

Die WO 2010/117793 A2 betrifft ein System zum Verarbeiten von gemessenen Kräften und Momenten für Reifenkontaktelemente eines Fahrzeugs in einem Windtunnel.

Die EP 1983322 A2 betrifft ein Rad für ein Testfahrzeug, wobei das Rad eine Felge und eine Nabe aufweist und im Kraftfluss zwischen der Nabe und der Felge zumindest ein Kraftsensor angeordnet ist.

Die DE 11 2009 00 0493 T5 betrifft ein Testsystem mit einer Plattform und einer Rückhalteinrichtung, um einen Testgegenstand in einer ausgewählten vertikalen Position relativ zu dem beweglichen Gurt zurückzuhalten.

Die US 2014/208839 A1 betrifft eine Plattform für eine Windkanalwaage.

Die JP 2006 170639 A betrifft ein Windkanaltestsystem zum Drehen und Antreiben eines Laufbandes zwischen einer Luftöffnung und einer Ansaugöffnung. Ein Band soll eine simulierte Oberfläche einer sich bewegenden Straße für ein zu messendes Fahrzeug simulieren.

Die DE 10 2011 085 640 A1 betrifft eine Windkanalwaage mit zumindest einer Bandeinheit mit einem Bandeinheitsrahmen an dem zumindest ein Laufband angeordnet ist, das um zumindest zwei Rollen geschlungen ist.

Die Aufgabe wird von der Erfindung gemäß den unabhängigen Patentansprüchen gelöst. Weitere bevorzugte Entwicklungen werden von den abhängigen Patentansprüchen beschrieben.

Ein Aspekt der Erfindung betrifft eine Haltevorrichtung für einen Windkanalprüfstand, wobei der Windkanalprüfstand insbesondere eine Windkanalwaage sein kann. Die Haltevorrichtung kann eine Haltebasis aufweisen, die außerhalb eines Laufbandes des Windkanalprüfstandes anordenbar ist.

Außerhalb des Laufbandes soll bevorzugt die Positionierung der Haltevorrichtung an einer Längsseite des Laufbandes umfassen. Besonders bevorzugt kann die Haltevorrichtung im Hinblick auf das durchlaufende Band ortsfest auf einer Plattform oder einer anderen Struktur angeordnet sein. Die Plattform kann bevorzugt eine Bandeinheit halten, um deren Rollen das Laufband geschlungen sein kann.

Ferner kann die Haltevorrichtung ein Trägerelement mit zumindest zwei Enden aufweisen. Bevorzugt kann das Trägerelement ein im Wesentlichen eindimensionaler Körper sein oder einen solchen aufweisen, wobei im Wesentlichen eindimensional bedeuten soll, dass im Hinblick auf die Länge des Körpers alle anderen Abmessungen in andere Richtungen/Dimensionen vernachlässigbar sind. Dies ist insofern auch für eine Vermeidung von (größeren) Störungen eines Fluidstroms und Messwertverfälschungen vorteilhaft, da insbesondere ein großer Durchmesser oder eine große Breite/Höhe des Trägerelementes zu unerwünschten Verfälschungen führen können.

Ein Ende des Trägerelementes kann mit der Haltebasis verbunden sein, so dass eine (rotatorische) Ausrichtung des Trägerelementes relativ zu der Halteinrichtung veränderbar sein kann. Ein anderes Ende, bevorzugt das in Längsrichtung entgegengesetzt angeordnete, kann über ein Verbindungselement mit einem Rad eines Prüfobjektes verbindbar sein.

Hier sei angemerkt, dass die Formulierung "über ein Verbindungselement" nicht ausschließen soll, dass weitere Bauteile/Elemente zwischen dem Rad und dem Trägerelement angeordnet sein können.

Das Prüfobjekt kann bevorzugt ein Kraftfahrzeug sein, insbesondere ein Personenkraftwagen oder ein Lastkraftwagen.

Das Verbindungselement kann bevorzugt dazu vorgesehen sein, das drehbare (Kraftfahrzeug-)Rad von dem Trägerelement bzw. der Haltevorrichtung in Drehrichtung zu entkoppeln. Mit anderen Worten soll eine Drehung oder Torsion des Trägerelementes nicht zu einer Drehung des Rades führen, was durch das Verbindungselement realisiert werden kann. Das Verbindungselement kann bevorzugt ein Drehlager sein.

Weiterhin kann die Haltevorrichtung eine Abstützeinrichtung aufweisen, die derart mit dem Trägerelement verbunden sein kann, dass eine Veränderung der rotatorischen Ausrichtung des Trägerelementes eine Hub- oder Senkbewegung der Abstützeinrichtung bewirken kann.

Hier sei angemerkt, dass eine rotatorische Ausrichtung eine Rotationsposition eines vorbestimmten Punktes auf dem Trägerelement um die y-Achse als Rotationsachse angeben kann. Das Koordinatensystem ist bevorzugt so gewählt, dass die x-Achse in Laufrichtung eines Laufbandes des Prüfstandes/der Windkanalwaage zeigt. Die y-Achse steht quer zum Laufband. Die z-Achse zeigt ausgehend von der Oberfläche eines Obertrums des Laufbandes weg vom Laufband.

Mit anderen Worten kann die rotatorische Ausrichtung eine Drehposition/Verdrehung/Torsion des Trägerelementes um die y-Achse angeben. Die rotatorische Ausrichtung des Trägerelementes kann insbesondere mittels Drehung des Trägerelementes und/oder Torsion des Trägerelementes verändert werden.

Eine Hub- oder Senkbewegung soll bevorzugt bedeuten, dass eine z-Position der Abstützeinrichtung bzw. deren freien Endes verändert wird. Die Verbindung der Abstützeinrichtung mit dem Trägerelement kann folglich so sein, dass eine Rotation und/oder Torsion des Trägerelementes, also eine rotatorische Bewegung, in eine im Wesentlichen lineare Bewegung (eines Teils) der Abstützeinrichtung umgewandelt werden kann.

Mit nochmals anderen Worten kann mittels des Trägerelementes ein Drehmoment, das an das Trägerelement angelegt werden kann, durch die Abstützeinrichtung an dem Prüfobjekt, bevorzugt ein Teil der Fahrzeugkarosserie, abgestützt werden.

Die Verbindung zwischen einem Ende des Trägerelementes und der Haltebasis kann bevorzugt mittels einer Rotationslagerung realisiert sein. Mit anderen Worten kann das Trägerelement bevorzugt so an der Haltebasis gelagert sein, dass das Trägerelement einen Rotationsfreiheitsgrad relativ zu der Haltebasis (um die y-Achse) aufweist und die weiteren rotatorischen und translatorischen Freiheitsgrade unterbunden sein können. Es ist ferner jedoch auch möglich, dass bspw. ein weiterer Freiheitsgrad vorhanden sein kann. Besonders bevorzugt kann neben dem rotatorischen Freiheitsgrad um die y-Achse auch ein translatorischer Freiheitsgrad entlang der y-Achse vorhanden sein, so dass das Trägerelement in y-Richtung relativ zur Haltebasis ausgerichtet werden kann.

Im Zusammenhang mit der Befestigung des Prüfobjektes auf/über dem Laufband wird regelmäßig auch von einer "Fesselung" gesprochen.

Die Haltevorrichtung ermöglicht es, dass die von einem Drehmoment (an dem Trägerelement) erzeugte vertikale Kraft eine Gegenkraft in gleicher Größe in entgegengesetzter Richtung erzeugt. Aufgrund dieser beiden Kräfte gleicher Größe und entgegengesetzter Richtung wird die sogenannte Aufstandskraft am Wiegepad trotz Krafteinleitung in das Prüfobjekt nicht beeinflusst bzw. verfälscht. Mit anderen Worten kann die Höhe des Prüfobjektes über dem Laufband, insbesondere die Unterbodenfreiheit, verändert werden, ohne dass Messwertverfälschungen bei der Kraftmessung an den Wiegepads auftreten.

Die rotatorische Ausrichtung des Trägerelementes kann mittels eines Drehmomentes veränderbar sein. Das Drehmoment kann manuell und/oder maschinell erzeugbar/veränderbar sein. Das Trägerelement kann durch das Drehmoment tordiert und/oder rotiert werden. Die maschinelle Veränderung der rotatorischen Ausrichtung hat den technischen Vorteil, dass u.a. auch eine computergestützte Steuerung ermöglicht wird, die ein computergesteuertes Verändern der rotatorischen Ausrichtung erlauben kann. Die manuelle Veränderung ist baulich besonders wenig komplex umsetzbar. Eine Kombination erlaubt es, auch noch z.B. bei einem Ausfall der maschinellen Steuerung eine gewünschte Einstellung/Veränderung auszuführen.

Die Haltebasis kann eine Ausrichtungseinrichtungzur maschinellen Veränderung der rotatorischen Ausrichtung des Trägerelementes umfassen. Diese kann einen Torquemotor umfassen, der an der Haltebasis angeordnet sein kann und eine Drehung/Drehmoment auf das Trägerelement übertragen kann. Ferner kann auch ein Hebelelement (drehfest) mit dem Trägerelement verbunden sein, wobei das Hebelelement von einem seitlich versetzt angeordneten Aktuator bewegt werden kann, insbesondere so dass eine Bewegung des Hebels zu einer (Ver-)Drehung des Trägerelementes führen kann.

Bevorzugt kann das Trägerelement eine Welle sein, besonders bevorzugt eine Torsionswelle oder eine Torsionsfeder.

Ferner kann die Abstützeinrichtung ein Hebelarmelement umfassen, das an einem Ende (drehfest) mit dem Trägerelement angeordnet sein kann und das an einem anderen (freien) Ende eine Fahrzeugaufnahme aufweisen kann. Der Hebelarm kann z.B. in einem Winkel von bevorzugt 90° zu der Längsachse des Trägerelementes angeordnet sein und an seinem freien Ende die Fahrzeugaufnahme aufweisen. Diese kann beispielsweise ein plattenförmiges Element sein, das lösbar oder fest mit dem Hebelarmelement verbunden sein kann und das bevorzugt einen Winkel von 90° zu einer Längsachse des Hebelarmelementes aufweist. Andere Winkel sind jeweils auch möglich, beispielsweise spitzere oder stumpfere Winkel. Das bevorzugt plattenförmige Element kann unterhalb einer Karosserie eines Kraftfahrzeuges angeordnet werden, um diese anheben oder absenken zu können. Die Fahrzeugaufnahme kann zudem auch bestimmte Adapterelemente oder dgl. aufweisen, z.B. um mit der Karosserie lösbar verbunden werden zu können oder dgl. Das Verwenden eines Hebelarmelementes ist somit eine konstruktiv wenig komplexe Möglichkeit, das Prüfobjekt sicher und zuverlässig anheben und absenken zu können.

Die Abstützeinrichtung kann eine Zahnstange aufweisen, dessen Zähne in ein Ritzel-Zahnrad, das mit dem Trägerelement (fest) verbunden sein kann, eingreifen können. Somit kann eine Rotation in eine lineare Bewegung eines Hebels oder Stützelementes, der/das mit dem Prüfobjekt verbunden sein kann, umgewandelt werden. Beispielsweise kann die Fahrzeugaufnahme mit der Zahnstange verbunden sein. Das Ritzel kann direkt in das Trägerelement eingebracht/eingeformt sein, um eine materialeffiziente Ausführung zu ermöglichen.

Ferner kann die Abstützeinrichtung ein Seil aufweisen, dessen eines Ende mit dem Trägerelement verbunden sein kann und dessen anderes Ende an einem Abschnitt des Prüfobjektes bzw. einer Fahrzeugaufnahme anordenbar sein kann. Der Begriff Seil soll insbesondere ein flexibles, im Wesentlichen eindimensionales Element (mit zwei Enden) umfassen, das auch eine Elastizität in Längsrichtung aufweisen kann. Das Seil kann mit einem Ende fest mit dem Trägerelement verbunden sein, so dass das Seil entweder auf- oder abgewickelt werden kann, wenn das Trägerelement rotiert/tordiert wird. Das Abwickeln oder Aufwickeln kann eine Veränderung der Unterbodenfreiheit des Prüfobjektes auf konstruktiv wenig aufwendige Weise ermöglichen. Die Fahrzeugaufnahme weist bei einer Abstützeinrichtung mit Seil bevorzugt einen Klemm- oder Eingriffsabschnitt auf, der z.B. einen Teil des Radkastens fest greifen kann, so dass eine Zugkraft von dem Seil auf das Prüfobjekt geleitet werden kann.

Die Abstützeinrichtung kann einen Doppelhebelarm umfassen, wobei ein erster Hebelarm drehfest mit dem Trägerelement verbunden sein kann, ein freies Ende eines zweiten Hebelarmes/Pleuelstange mit dem Prüfobjekt und der erste und der zweite Hebelarm mittels eines Gelenkes miteinander verbunden sein können. Diese Möglichkeit ist u.a. platzsparender als das Heranziehen eines starren Hebelarmelementes.

Ferner kann das Trägerelement teleskopierbar ausgeführt sein, so dass, neben einer entsprechenden Lagerung des Trägerelementes an der Haltebasis, eine zusätzliche oder alternative Möglichkeit zur Positionierung des Trägerelementes in y-Richtung angeboten werden kann.

Die rotatorische Ausrichtung des Trägerelementes kann manuell mittels eines Drehmomentschlüssels veränderbar sein, wobei ein Ende des Trägerelementes einen Adapter zur Aufnahme des Drehmomentschlüssels haben kann. Der Adapter kann integral in das Ende des Trägerelementes eingeformt sein oder dort montiert sein.

Ferner kann ein Aspekt einen Windkanalprüfstand beinhalten, der zumindest eine voranstehend beschriebene Haltevorrichtung für jedes Kraftfahrzeugrad, zumindest eine Bandeinheit mit einem Laufband, das um zwei Rollen geschlungen sein kann, und zumindest ein Wiegepad für jedes Kraftfahrzeugrad, das unterhalb des Laufbandes angeordnet sein kann, aufweisen kann. Die Haltebasis kann optional auf einer Plattform, an der die Bandeinheit angeordnet sein kann, befestigt sein. Weiter optional kann die Plattform um eine z-Richtung herum drehbar gelagert sein.

Ferner können an jeder Seite eines Prüfobjektes jeweils zwei Haltevorrichtungen angeordnet sein, die jeweils einem Kraftfahrzeugrad zugeordnet sein können. Ein Querverbindungselement kann zwischen den beiden Trägerelementen zweier benachbarter Haltevorrichtungen angeordnet sein. Das Querverbindungselement erlaubt es, die Steifigkeit eines Verbundes aus zwei Haltevorrichtungen zu erhöhen, damit das Prüfobjekt zuverlässig in der vorgegebenen Position gehalten werden kann. Bevorzugt kann das Querverbindungselement so angeordnet sein, dass es ein Ende eines Trägerelementes mit einem in Längsrichtung entgegengesetzten anderen freien Ende des anderen Trägerelementes verbinden kann. Ganz besonders bevorzugt ist das Querverbindungselement in einer Draufsicht schräg zur x-Achse angeordnet, d.h. es weist eine Steigung entlang einer Strömungsrichtung des Fluidstromes auf. Die Steigung kann positiv oder negativ sein, wobei positiv bedeutet, dass das in x-Richtung vordere Ende des Querverbindungselementes in y-Richtung näher zu einem Prüfobjekt angeordnet ist als das hintere Ende. Das Querverbindungselement kann besonders bevorzugt deutlich länger als breit und hoch sein, d.h. es ist im Wesentlichen bevorzugt eindimensional.

Ferner umfasst ein Aspekt ein Verfahren zur Prüfung eines Kraftfahrzeuges. Dieses ist mit einer voranstehend beschriebenen Haltevorrichtung auf/oberhalb eines Laufbandes eines Windkanalprüfstandes befestigt. Eine Bezugsebene/die Nullebene des x-,y-,z-Koordinatensystems kann auf einer Oberfläche des Laufbandes angeordnet sein. Das Verfahren kann die Schritte (in der nachfolgend angeführten oder in einer anderen Reihenfolge) umfassen: Erzeugen eines Fluidstroms, der in einer Längsrichtung des Laufbandes strömt. Berechnen einer Fesselungsstörgröße. Verrechnen der Fesselungsstörgröße mit Messwerten des Prüfverfahrens. Im Übrigen kann das in dieser Anmeldung beschriebene Verfahren analog auch für eine Fesselungsstörgröße durchgeführt werden, die von einer Haltevorrichtung erzeugt wird, die kein Drehmoment zum Verändern der vertikalen Fahrzeugposition verwendet; so kann das Verfahren beispielsweise auch bei einer (vorbekannten/konventionellen) Haltevorrichtung herangezogen werden, die linear verfahren wird, um die vertikale Positionierung des Kraftfahrzeuges zu ändern.

Ferner kann die Fesselungsstörgröße $\Sigma$ aus $\sum = \dfrac{F_x \, z_{Radnabe}}{x_{Achsabstand}}$ berechnet werden, wobei Fx einer Kraft, die von der Fluidströmung erzeugt wird, $z_{Radnabe}$ einem Abstand zwischen Bezugsebene und Radnabe des Prüfobjektes sowie $x_{Achsabstand}$ einem Achsabstand des Prüfobjektes entsprechen können.

Die Fesselungsstörgröße kann einer gemessenen Gewichtskraft einer Hinterachse des Prüfobjektes rechnerisch hinzugefügt werden, wenn das Prüfobjekt mittels einer Haltevorrichtung je Kraftfahrzeugrad gehalten wird und ein Querverbindungselement zwischen zwei benachbarten Haltevorrichtungen derart angeordnet ist, dass eine Längsachse des Querverbindungselementes in einer Querrichtung zur Fluidströmungsrichtung eine positive Steigung aufweist.

Die Fesselungsstörgröße kann von einer gemessenen Gewichtskraft einer Vorderachse des Prüfobjektes rechnerisch abgezogen werden, wenn das Prüfobjekt mittels einer Haltevorrichtung je Kraftfahrzeugrad gehalten wird und ein Querverbindungselement zwischen zwei benachbarten Haltevorrichtungen derart angeordnet ist, dass eine Längsachse des Querverbindungselementes in einer Querrichtung zur Fluidströmungsrichtung eine negative Steigung aufweist.

Das Verfahren erlaubt es somit, dass windkraft- und fesselungsbedingte Messwertverfälschungen aus den Messwerten der Wiegepads herausrechenbar sind, so dass die Genauigkeit der Prüfung weiter erhöht werden kann.

Zusammenfassend haben die vorgestellten Aspekte den Vorteil, dass eine Prüfung eines Kraftfahrzeuges mit erhöhter Genauigkeit durchgeführt werden kann, und dies sogar, wenn das Fahrzeug im Hinblick auf seine Unterbodenfreiheit während der Prüfung eingestellt/verändert wird.

Die hier dargelegte Vorrichtung und das dazugehörige werden im Folgenden exemplarisch mit Bezug auf die beigefügten, schematischen Zeichnungen beschrieben. Es zeigen

Fig. 1 eine Draufsicht mehrerer Haltevorrichtungen und eines Windkanalprüfstandes,
Fig. 2 eine weitere Draufsicht auf mehrere Haltevorrichtungen und einen Windkanalprüfstand,
Figs. 3a - 3c unterschiedliche Beispiele für eine Abstützreinrichtung der hier beschriebenen Haltevorrichtung,
Figs. 4a - 4b weitere Beispiele für Abstützeinrichtungen für hier beschriebene Haltevorrichtungen und
Figs. 5a - 5c Beispiele für hier beschriebene Haltevorrichtungen.

Im Folgenden werden verschiedene Beispiele detailliert und unter Bezugnahme auf die Figuren beschrieben. Gleiche bzw. ähnliche Elemente in den Figuren werden hierbei mit gleichen Bezugszeichen bezeichnet. Die vorliegende Vorrichtung und das Verfahren sind jedoch nicht auf die beschriebenen Kombinationen von Merkmalen begrenzt. Vielmehr sollen auch weitere Modifikationen und Kombinationen von Merkmalen verschiedener Beispiele im Rahmen des Schutzumfangs der unabhängigen Ansprüche umfasst sein.

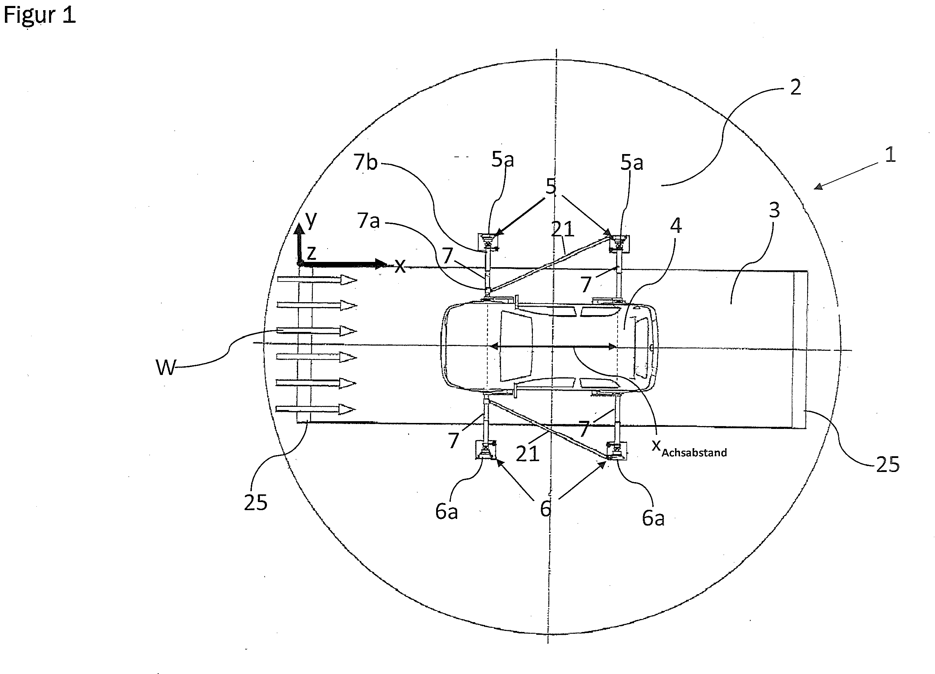

In der Fig. 1 wird eine Prüfanlage insbesondere ein Teil eines Windkanalprüfstandes 1 in Draufsicht gezeigt. Die an der linken Seite von links nach rechts gezeichneten Pfeile sollen einen Fluidstrom F darstellen, der zum Prüfen bzw. Testen der aerodynamischen Eigenschaften des Prüfobjektes bzw. Kraftfahrzeugs 4 verwendet wird.

Das in Fig. 1 eingezeichnete Koordinatensystem hat seinen Nullpunkt auf einer oberen Oberfläche des Laufbandes 3 des Windkanalprüfstandes 1, wobei die X-Richtung in Laufrichtung des Laufbandes 3 zeigt, die Y-Richtung entlang der Querrichtung des Laufbandes 3 angeordnet ist und die Z-Richtung aus der Oberfläche des Laufbandes 3 herauszeigt.

Der Windkanalprüfstand 1 ist insbesondere mit einer Plattform 2 verbunden, die gegenüber der Fluidströmungsrichtung gedreht werden kann, d. h. sie ist um die Z-Achse drehbar gelagert. In der Plattform 2 ist eine Bandeinheit mit einem einzelnen Laufband 3 eingelassen, wobei auch mehrere Bandeinheiten und/oder mehrere Laufbänder 3 in die Plattform 2 eingelassen sein können. Weiter kann auch das gezeigte Laufband 3 der Fig. 1 in mehrere Einzelbänder unterteilt sein.

Auf der Oberfläche des Laufbandes 3 ist das Prüfobjekt 4 angeordnet und wird durch vier der hier beschriebenen Haltevorrichtungen 5, 6 in Position gehalten. Im Einzelnen umfassen die Haltevorrichtungen jeweils eine in Fig. 1 gezeigte Haltebasis 5a, 6a, an der ein Trägerelement 7 angeordnet ist. Die vier gezeigten Trägerelemente 7 der Haltevorrichtungen 5, 6 halten das Fahrzeug auf dem Laufband 3 in Position. Bevorzugt ist das Fahrzeugs in Y-Richtung mittig zum Laufband 3 und in X-Richtung mittig zwischen den zur Bandeinheit gehörenden Rollen 25 positioniert. Zwischen jeweils zwei benachbarten Haltevorrichtungen 5, 6 zeigt die Fig. 1 ein Querverbindungselement 21. Die Querverbindungselemente 21 verlaufen schräg in X-Richtung gesehen von vorne nach hinten. Die Querverbindungselemente 21 erhöhen die Steifigkeit eines Verbundes, der aus jeweils zwei benachbarten Haltevorrichtungen 5, 6 gebildet ist.

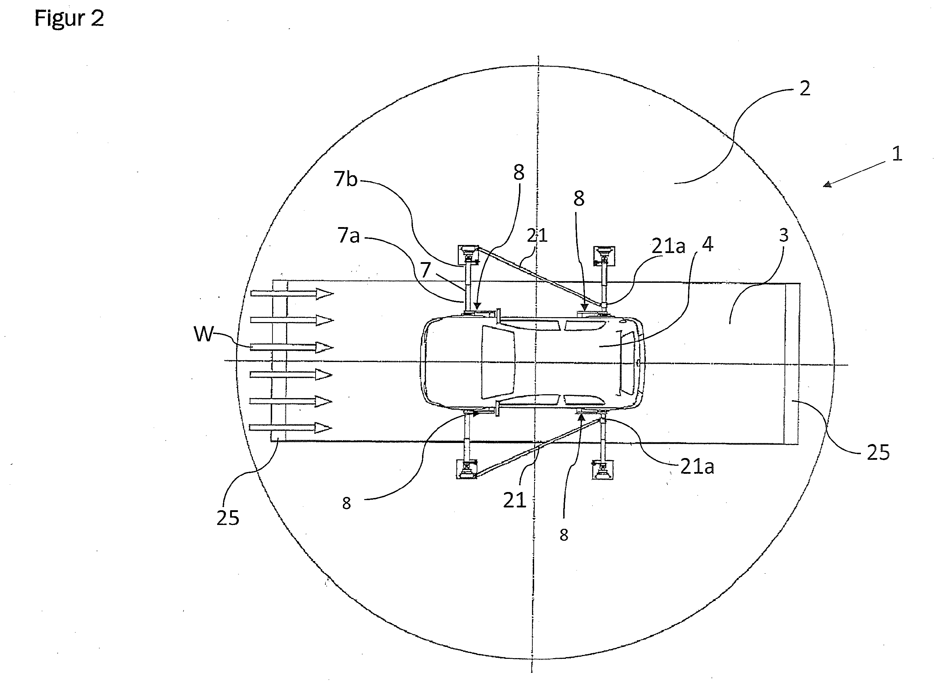

Die Fig. 2 zeigt ebenfalls einen Windkanalprüfstand 1 in Draufsicht. Hier sind die Querverbindungselemente 21 alternativ zu der Anordnung in Fig. 1 ortsfest von in X-Richtung vorne nach hinten schräg auf das Fahrzeug zulaufend befestigt. Die Querverbindungselemente 21 können z.B. mit Schraubverbindungen an der Haltebasis 5a, 6a angeordnet sein und beispielsweise mit einer Ringmanschette 21a an dem Trägerelement 7a befestigt sein. Andere Befestigungsmöglichkeiten sind nicht ausgeschlossen.

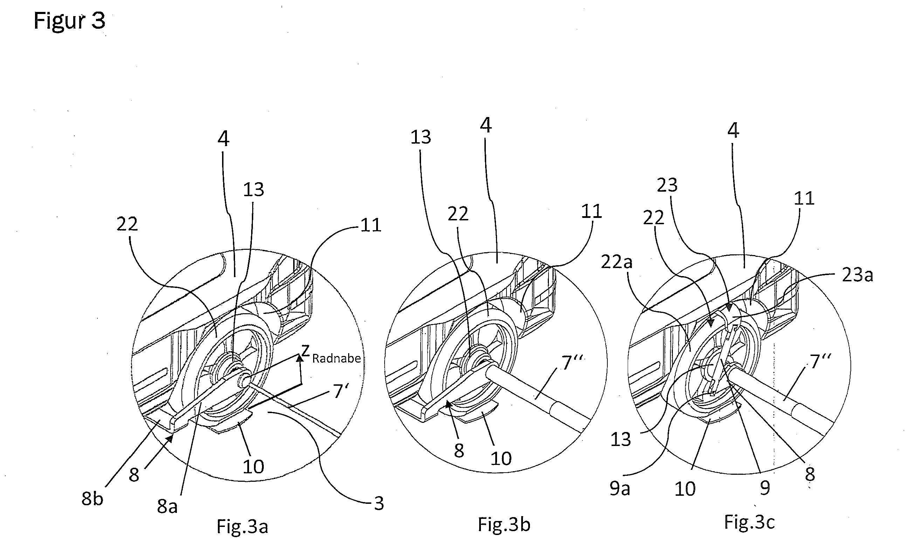

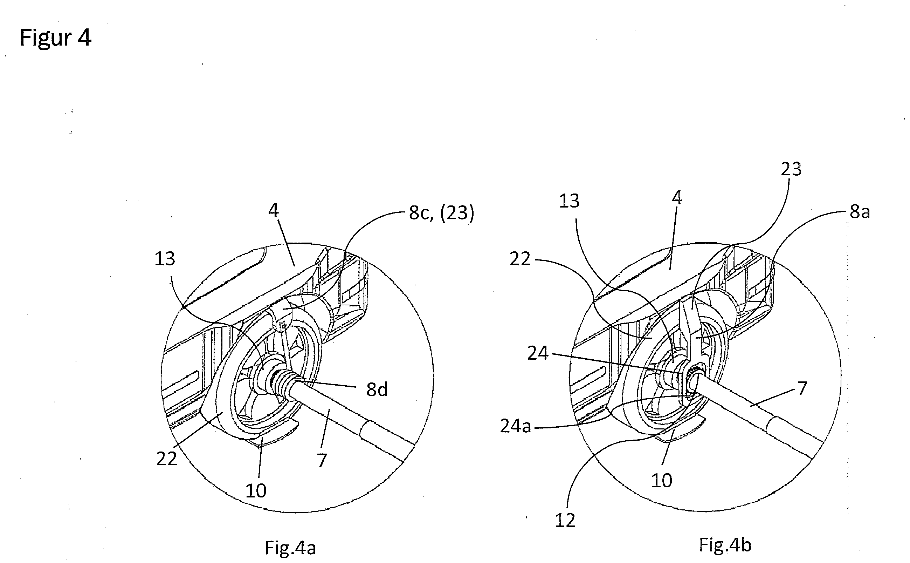

Weiterhin zeigen die Figs. 1 und 2 auch weitere Bestandteile der Haltevorrichtungen 5, 6, insbesondere Abstützeinrichtungen 8. Die Abstützeinrichtungen 8 sind jeweils an dem Ende 7a des Trägerelementes 7 angeordnet, das entgegengesetzt zu dem Ende 7b, das mit der Haltebasis 5a, 6a verbunden ist, angeordnet ist. Mit anderen Worten ist das Ende 7a, das das näher zum Prüfobjekt 4 angeordnet ist. Beispiele verschiedener Abstützeinrichtung 8 zeigen die Figs. 3 und 4, die nachfolgend beschrieben werden.

Die Figs. 3 und 4 zeigen jeweils ein Fahrzeugrad 22, das sich auf einer Waage bzw. einem Wiegepad 10 abstützt. Das Wiegepad 10 ist in der Figur der Verständlichkeit halber sichtbar gezeichnet, obwohl es unter dem Laufband 3 angeordnet ist. Bei der Messung durch das Laufband 3 hindurch spricht man üblicherweise von einer Durchbandmessung. Das Wiegepad 10 ermöglicht es, vertikale Kräfte, d.h. Z-Kräfte bzw. Z-Komponenten von Kräften, durch das Band 3 hindurch zu erfassen, wobei oberhalb des Wiegepads 10 auf dessen Oberfläche eine fluidische Gleitfläche angeordnet ist. Die fluidische Gleitfläche wird durch einen dünnen Luftfilm erzeugt, der zwischen einer unteren Oberfläche des Laufbandes 3 und einer Oberfläche des Wiegepads 10 angeordnet ist. Diese fluidische Gleitfläche, die nicht gezeigt ist, ermöglicht es, dass keine nennenswerten Reibkräfte zwischen Laufband 3 und Wiegepad 10 auftreten, wenn das Laufband 3 oberhalb des Wiegepads 10 abrollt bzw. über dieses hinwegbewegt wird.

Weiterhin haben die in den Figs. 3 und 4 gezeigten Beispiele gemeinsam, dass am Ende des Trägerelements 7 ein Verbindungselement 13 angeordnet ist, das als Drehlager in den vier beschriebenen Figuren ausgeführt ist. Dieses Drehlager verbindet insbesondere eine Radnabe des Rades 22 mit dem äußeren Ende 7a des Trägerelementes 7, sodass in der in Y-Richtung angeordneten Rotationsrichtung im Wesentlichen keine Rotation von dem Rad 22 auf das Trägerelement 7 oder anderes herum übertragen wird. Andere Kräfte, insbesondere diese zum in Position halten des Kraftfahrzeugrades 22 bzw. des damit verbundenen Prüfobjektes 4 werden hingegen übertragen, dies sind insbesondere translatorische Kräfte in X-, Y- und Z-Richtung.

Im spezifischen zeigt die Fig. 3a ein Beispiel, bei dem das Trägerelement 7 eine Torsionsfeder 7' ist. Die Torsionsfeder 7' wird aufgrund eines eingeleiteten Drehmomentes tordiert, was zu einer rotatorischen Positionsveränderung (des Trägerelementes 7) führt. Ferner zeigt die Fig. 3a, dass an einem Endabschnitt der Torsionsfeder 7' ein Hebelarmelement 8a drehfest angeordnet ist. Dieses Hebelarmelement 8a weist eine Länge auf, die zumindest größer ist als ein Radius des Kraftfahrzeugrades 22 und ganz besonders bevorzugt größer ist als ein Radius eines Radkastens 11 des Prüfobjektes 4. Das Hebelarmelement 8a ist, wie Fig. 3a zeigt, an einer Querschnittsaufweitung der Torsionsfeder 7' befestigt und steht mit 90° zu der Längsachse der Torsionsfeder 7' von dieser ab. Ebenfalls mit einem Winkel von 90° zur Längsachse des Hebelarmelementes 8a steht weiterhin ein plattenförmiges Element 8b, das integral mit dem Hebelarmelement 8a gestaltet ist, ab. Dieses plattenförmige Element 8b fungiert als Fahrzeugaufnahme 8c, die eine Karosserie des Prüfobjektes 4 untergreift, um eine Hub- und/oder Senkbewegung der Abstützeinrichtung 8 auf das Prüfobjekt 4 zu übertragen.

Konkret wird eine Torsion der Torsionsfeder 7' über das Hebelarmelement 8a und die Fahrzeugaufnahme 8c in eine vertikale Heb- oder Senkkraft umgewandelt und zu dem Prüfobjekt 4 geleitet. Vorteilhaft ist an dieser Gestaltung, dass gleichzeitig zu der auf das Prüfobjekt 4 übertragenen vertikalen Kraft eine entgegengesetzte Kraft mit gleichem Betrag auf das Wiegepad 10 übertragen wird. Somit findet ein Ausgleich der Kraft, die zum Heben oder Senken des Kraftfahrzeugs notwendig ist, statt und es kommt zu keiner Messwertverfälschung.

In der Fig. 3b wird beispielhaft statt einer Torsionsfeder 7' eine Torsionswelle 7" als Trägerelement 7 herangezogen. Der weitere Aufbau entspricht dem der Fig. 3a. Weiterhin zeigt die Fig. 3c ein Beispiel, bei dem eine Pleuelstange 9 einer Doppelhebelarmkonstruktion mit dem Hebelarmelement 8 gelenkig verbunden ist. Ferner ist die Pleuelstange 9 mit einer Fahrzeugaufnahme 8c, die als Karosserieadapter 23 gezeigt ist, gelenkig verbunden. Der Karosserieadapter 23 ist derart geformt, dass dieser um den äußeren Durchmesser des Rades 22 herum greifen kann und einen oberen Bereich des Fahrzeugradkastens 11 untergreifen kann. Der Karosserieadapter 23 weist einen Radius 23a auf, der bevorzugt gleich groß oder größer ist als ein äußerer Kantenradius 22a des Fahrzeugreifens 22.

Das Doppelhebelarmgelenk verbindet die Pleuelstange 9 und das Hebelarmelement 8, das fest mit dem Trägerarmelement 7 verbunden ist, sodass eine Dreh- bzw. Torsionsbewegung des Trägerelementes 7 in eine Hub- und'/oder Senkbewegung der Fahrzeugaufnahme 8c/23 umgewandelt werden kann.

Weiterhin zeigt die Fig. 4a ein Beispiel, bei dem die Abstützeinrichtung 8 ein Seil 8d umfasst, dessen Zugkraft proportional zu dem in das Trägerelement 7 eingeleitete Drehmoment ist. Wird das Seil 8d durch eine Drehbewegung des Trägerelementes 7 abgewickelt, so hebt sich das Prüfobjekt 4 aufgrund der festen Verbindung zwischen Fahrzeugaufnahme 23 und Seil 8d und aufgrund der Federwirkung einer Radaufhängung. Ein Absenken wird mittels eines Aufwickelns des Seils 8d auf das Trägerelement 7 erreicht. Die gezeigte Fahrzeugaufnahme 8c ist bevorzugt wie die oben bereits beschriebene Fahrzeugaufnahme des Beispiels der Figur 3c geformt. Zudem kann die Fahrzeugaufnahme 23 eine Bohrung zur Befestigung des Seils 8c sowie ein Klemm- oder Eingriffsmittel aufweisen, das mit der Karosserie des Prüfobjektes 4 lösbar fest verbunden werden kann

Weiterhin zeigt Fig. 4b, dass das Trägerelement 7 an einem äußeren Endabschnitt ein Zahnrad bzw. Ritzel 12 aufweist, das mit einer gegenüberliegenden Zahnstange 24 verzahnt ist. Die Zahnstange 24 ist derart ausgeführt, dass sie ein Hebelarmelement 8a aufweist, bzw. mit diesem verbunden ist, und das Hebelarmelement 8a an einem Endbereich eine Öffnung 24a aufweist, die es erlaubt das Trägerelement 7 zu umgreifen. Das Hebelarmelement 8a, das beispielhaft integral mit der Zahnstange 24 gezeigt ist, weist an einem anderen freien Ende eine Fahrzeugaufnahme 23 zum Kontaktieren der Fahrzeugkarosserie auf. Das Tordieren bzw. Drehen des Trägerelementes 7 führt aufgrund der Verzahnung zwischen Ritzel 12 und Zahnstange 24 zu einer Übersetzung von einer rotatorischen Bewegung in eine translatorischen Bewegung, die zum Senken bzw. Anheben des Kraftfahrzeuges/Prüfobjektes 4 herangezogen werden kann.

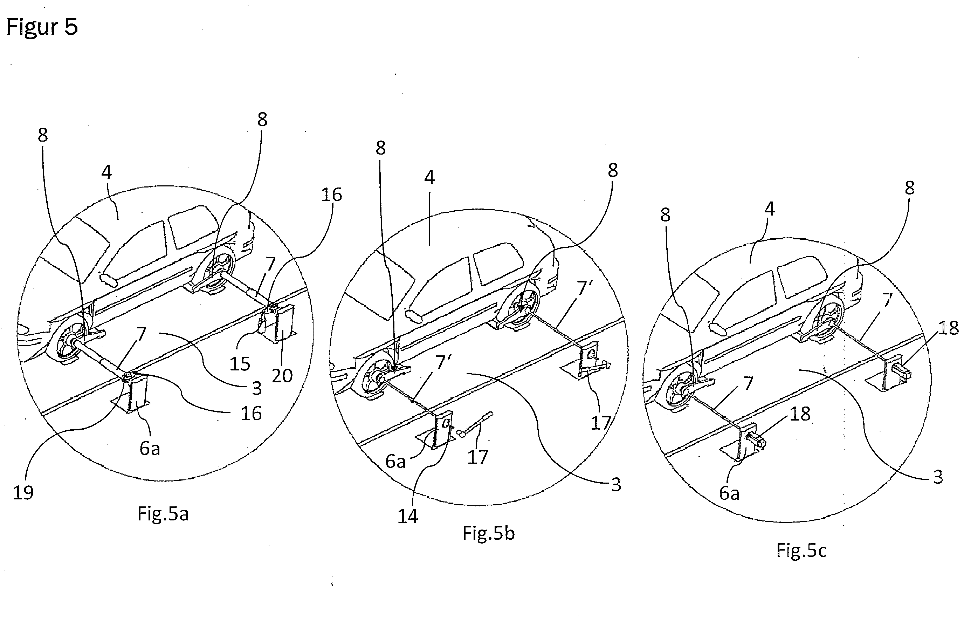

Zudem zeigen die drei Einzelabschnitte der Fig. 5 unterschiedliche Beispiele, insbesondere im Hinblick auf die Ausgestaltung des Drehmechanismus bzw. eines Einleitemechanismus' eines Drehmomentes in das Trägerelement 7. In einer manuellen Ausgestaltung gemäß Fig. 5b weist das Trägerelement 7 bzw. ein Abschnitt der Haltebasis 5a, 6a einen Werkzeugadapter 14 auf, der mit einem Werkzeug 17, der bevorzugt ein Drehmomentschlüssel ist, verbindbar ist. Somit kann mittels des Drehmomentschlüssels 17 ein Drehmoment in das Trägerelement 7 eingeleitet werden, das z.B. zur Torsion der Torsionsfeder 7' führt. Das Drehmoment wird so (lange) variiert, bis die Lage der Karosserie in Z-Richtung der gewünschten Position entspricht. Im Anschluss kann die rotative Ausrichtung des Trägerelementes 7 an der Haltebasis 5a, 6a arretiert werden. Dazu können beispielsweise passförmige oder kraftschlüssige Mittel jeweils an Haltebasis 5a, 6a und Trägerelement 7 angeordnet sein. Beispielsweise kann ein Klemmmechanismus und/oder ein Eingriffsmechanismus vorgesehen sein, der durch Einklemmen und/oder Einrasten des Trägerelementes 7 dieses in einer eingestellten rotatorischen Ausrichtungsposition fixiert.

Weiterhin zeigt die Fig. 5c eine Ausgestaltung, bei der Torquemotoren 18 ein Drehmoment bzw. eine Drehung automatisiert und bevorzugt computergesteuert in das Trägerelement 7 einleiten. Alternativ dazu zeigt die Fig. 5a, dass ein Aktuator 15 in Z-Richtung aus- oder eingefahren wird, um über einen Hebel 16 eine Drehung in das Trägerelement 7 bzw. eine Rotation in das Trägerelement 7 einzubringen. Dazu kann ein Ende des Hebels 16 drehfest mit dem Trägerelement 7 verbunden sein. Beispielsweise kann dies durch eine Feder-Nut-Verbindung oder eine Klemmmanschette 19 ausgeführt sein.

Weiterhin ist ebenfalls aus den Figs. 5a bis 5c ersichtlich, dass die Abstützeinrichtungen 8 an der vorderen und hinteren Haltevorrichtung 5, 6 in entgegengesetzte Richtung zueinander ausgerichtet sind, wobei dies ein Beispiel ist und eine andere Ausrichtung ebenfalls möglich wäre.

Zusammenfassend werden bei der hier beschriebenen Haltevorrichtung 5, 6 keine translatorischen Kräfte von dem ortsfesten Teil/Haltebasis 5a, 6a auf das Prüfobjekt 4 übertragen, sondern es werden Drehmomente in das Trägerelement 7 eingeleitet. Das im Bereich der Haltebasis 5a, 6a erzeugte Drehmoment wird am Prüfobjekt 4 mittels einer Abstützvorrichtung 8 in eine vertikale Kraft oder eine Kraft, die zumindest eine möglichst große vertikale Komponente aufweist, umgewandelt. Dadurch entsteht der technische Vorteil, dass die durch die Abstützeinrichtung 8 erzeugte Kraft eine Gegenkraft in gleicher Größenordnung/Betrag erzeugt und dadurch das Messergebnis des Wiegepads 10 nicht beeinflusst wird bzw. es nicht zu einem Messfehler kommt. Wie oben bereits erläutert wurde, kann das Drehmoment auf unterschiedliche Weise erzeugt werden und insbesondere manuell und/oder automatisiert.

Im Hinblick auf die dünnen Torsionswellen bzw. -Federn, die möglichst keine bzw. nur geringfügig eine Fluidströmungskraft $F_x$ aufnehmen, kann eine Steifigkeit und Sicherheit der Fixierung mittels der Querverbindungselemente 21 verbessert werden. Bei Verwendung einer Torsionsfeder 7' sei ferner angemerkt (insbesondere wenn auch ein Feststellmechanismus an der Haltebasis 5a, 6a zur Arretierung der Torsion bzw. der rotativen Ausrichtung verwendet wird), dass die Torsionsfeder 7' der Fahrzeugfeder der Radaufhängung parallel geschaltet wird, sodass die Fahrzeugfeder härter wird. Sollte dies in möglichen Anwendungsszenarien als nachteilig angesehen werden, so kann dies durch die hier beschriebene Vorrichtung ausgeglichen werden, z.B. dadurch dass zum Aufbringen des Drehmomentes ein oben beschriebener Torquemotor 21 verwendet wird. Der Torquemotor 21 hat den technischen Vorteil, dass sich das Drehmoment über den Drehwinkel nicht ändert. Dadurch ändert sich über die auf das Fahrzeug ausgeübte Kraft die Z-Lage bzw. Z-Position des Prüfobjektes 4, die Reifenfederhärte bzw. Fahrzeugfederhärte bleibt jedoch unbeeinflusst.

Die im Zusammenhang mit dem Torquemotor 21 vorgebrachten Ausführungen gelten genauso auch für die Verwendung eines Linearaktuators bei dem z.B. ein Zylinder mit konstantem Druck beaufschlagt wird, um den Aktuator linear zu verfahren (s. Fig. 5a).

Des Weiteren umfasst die hier beschriebene Erfindung auch ein Verfahren zur Prüfung von Kraftfahrzeugen mit Windkanalprüfständen 1, insbesondere Windkanalwagen. Dabei werden zumindest drei Kräfte $F_x$, $F_y$, $F_z$ und drei Drehmomente $M_x$, $M_y$, $M_z$ erfasst. Die Bezugsebene zur Erfassung dieser Kräfte ist in der Regel die obere Oberfläche des Laufbandes 3, insbesondere der Aufstandspunkt des Rades 22. Aufgrund einer Fesselung des Prüfobjektes 4 an seiner Radnabe, wie dies z.B. Fig. 3 zeigt, liegt ein Angriffspunkt einer Windkraft $F_x$ nicht in der Bezugsebene. Dadurch entsteht ein (Momenten-)Hebelarm, der ein Störmoment erzeugt. Damit dieses Störmoment nicht in die Prüfergebnisse miteinfließt und diese dadurch ungenauer werden, sieht das hier beschriebene Verfahren vor, dieses Störmoment bzw. Fesselungsstörgröße $\Sigma$ herauszurechnen. Dazu wird zunächst das Fluidströmungsmoment berechnet, wozu $F_x$ mit dem Abstand zwischen Oberfläche des Laufbandes zur Radmitte/Radnabe multipliziert wird. Ferner wird die Fesselungsstörgröße $\Sigma$ dadurch berechnet, dass das Fluidströmungsmoment durch den Achsabstand des Prüfobjektes 4 geteilt wird. Die entsprechende Gleichung lautet: $\Sigma = \dfrac{F_x \, z_{Radnabe}}{X_{Achsabstand}}$ Die sich daraus ergebende Fesselungsstörgröße/Kraft $\Sigma$ wird vom dem an den Wiegepads 10 erfassten Hinterachsgewicht abgezogen, wenn eine Konfiguration wie in Fig. 1 gezeigt ist verwendet wird.

Bei einer Konfiguration der Fesselung gemäß Fig. 2 wird die berechnete Größe $\Sigma$ dem Gewicht der Vorderachse zugeschlagen. Ein solches Vorgehen erlaubt es die Prüfungsgenauigkeit und Zuverlässigkeit weiter zu erhöhen, indem fesselungsbedingte Störgrößen bzw. Kräfte erfasst und rechnerisch ausgeglichen werden können.

Zusammenfassend ermöglichen die hier beschriebene Vorrichtung und das zugehörige Verfahren eine deutliche Verbesserung im Hinblick auf die Messgenauigkeit von Windkanalprüfständen.

## Patentansprüche

1.  Haltevorrichtung für einen Windkanalprüfstand, insbesondere für eine Windkanalwaage, mit

    - einer Haltebasis (5a, 6a), die außerhalb eines Laufbandes (3) des Windkanalprüfstandes (1) anordenbar ist,
    - einem Trägerelement (7) mit zumindest zwei Enden (7a, 7b), wobei ein Ende (7b) mit der Haltebasis (5a, 6a) verbunden ist und ein anderes Ende (7a) über ein Verbindungselement (13) mit einem Rad (22) eines Prüfobjektes (4) verbindbar ist, und wobei das Verbindungselement (13) das Trägerelement (7) und das Rad (22) in einer Drehrichtung voneinander entkoppelt, **gekennzeichnet durch** eine Abstützeinrichtung (8), die derart mit dem Trägerelement (7) verbunden ist, dass eine Veränderung einer rotatorischen Ausrichtung des Trägerelementes (7) eine Hub- oder Senkbewegung der Abstützeinrichtung (8) bewirkt.

2.  Haltevorrichtung gemäß Anspruch 1, **gekennzeichnet dadurch**, das Trägerelement (7) so mit der Haltebasis (5a, 6a) verbunden ist, dass eine rotatorische Ausrichtung des Trägerelementes (7) relativ zu der Haltebasis (5a, 6a) veränderbar ist, wobei die rotatorische Ausrichtung des Trägerelementes (7) mittels eines Drehmomentes veränderbar ist und das Drehmoment manuell und/oder maschinell erzeugbar/veränderbar ist.

3.  Haltevorrichtung gemäß zumindest einem der voranstehenden Ansprüche, **gekennzeichnet dadurch, dass** die Haltebasis (5a, 6a) eine Ausrichtungseinrichtung zur maschinellen Veränderung der rotatorischen Ausrichtung des Trägerelementes umfasst, und die Ausrichtungseinrichtung einen Torquemotor (18) oder einen mittels Aktuator (15) betriebenes Hebelelement (16) aufweist.

4.  Haltevorrichtung gemäß zumindest einem der voranstehenden Ansprüche, **gekennzeichnet dadurch, dass** das Trägerelement (7) eine Welle, insbesondere eine Torsionswelle (7") oder eine Torsionsfeder (7'), ist.

5.  Haltevorrichtung gemäß zumindest einem der voranstehenden Ansprüche, **gekennzeichnet dadurch, dass** die Abstützeinrichtung (8) ein Hebelarmelement (8a) umfasst, das an einem Ende mit dem Trägerelement (7) angeordnet ist und das an einem anderen Ende eine Fahrzeugaufnahme (8c) aufweist.

6. Haltevorrichtung gemäß zumindest einem der voranstehenden Ansprüche, **gekennzeichnet dadurch, dass** das Trägerelement (7) mit einem Ritzel-Zahnrad (12) verbunden ist, und das Ritzel (12) in eine Zahnstange (24) eingreift, die mit der Abstützeinrichtung (8) verbunden ist.

7. Haltevorrichtung gemäß zumindest einem der voranstehenden Ansprüche, **gekennzeichnet dadurch, dass** die Abstützeinrichtung (8) ein Seil (8d) aufweist, dessen eines Ende mit dem Trägerelement (7) verbunden ist und dessen anderes Ende an einem Abschnitt des Prüfobjektes (4) anordenbar ist.

8. Haltevorrichtung gemäß zumindest einem der voranstehenden Ansprüche, **gekennzeichnet dadurch, dass** die Abstützeinrichtung (8) einen Doppelhebelarm aufweist, wobei ein erster Hebelarm (8) drehfest mit dem Trägerelement (7) verbunden ist, ein freies Ende eines zweiten Hebelarmes (9) mit dem Prüfobjekt (4) und der erste und der zweite Hebelarm mittels eines Gelenkes (9a) miteinander verbunden sind.

9. Haltevorrichtung gemäß zumindest einem der voranstehenden Ansprüche, **gekennzeichnet dadurch, dass** das Trägerelement (7) teleskopierbar ausgeführt ist.

10. Haltevorrichtung gemäß zumindest einem der voranstehenden Ansprüche, **gekennzeichnet dadurch, dass** die rotatorische Ausrichtung des Trägerelementes (7) manuell mittels eines Drehmomentschlüssels (17) veränderbar ist, wobei ein Ende des Trägerelementes (7) einen Adapter (14) zur Aufnahme des Drehmomentschlüssels (17) aufweist.

11. Windkanalprüfstand mit

   - zumindest einer Haltevorrichtung (5,6) für jedes Kraftfahrzeugrad (22) gemäß zumindest einem der voranstehenden Ansprüche,
   - zumindest einer Bandeinheit mit einem Laufband (3), das um zwei Rollen (25) geschlungen ist, und
   - zumindest einem Wiegepad (10) für jedes Kraftfahrzeugrad (22), das unterhalb des Laufbandes (3) angeordnet ist, wobei
   - die Haltebasis (5a, 6a) auf einer Plattform (2), an der die Bandeinheit angeordnet ist, befestigt ist und die Plattform (2) um eine z-Richtung herum drehbar ist.

12. Windkanalprüfstand gemäß Anspruch 11, **gekennzeichnet dadurch, dass** auf jeder Seite eines Prüfobjektes (4) jeweils zwei Haltevorrichtungen (5, 6) angeordnet sind, die jeweils einem Kraftfahrzeugrad (22) zugeordnet sind, und

   - ein Querverbindungselement (21) zwischen den beiden Trägerelementen (7) zweier benachbarter Haltevorrichtungen (5, 6) angeordnet ist, insbesondere ist das Querverbindungselement (21) so angeordnet, dass es ein Ende eines Trägerelementes (7) mit einem in Längsrichtung entgegengesetzten anderen freien Ende des anderen Trägerelementes (7) verbindet.

13. Verfahren zur Prüfung eines Kraftfahrzeuges, das mit einer Haltevorrichtung (5, 6) gemäß zumindest einem der Ansprüche 1-10 oberhalb eines Laufbandes (3) eines Windkanalprüfstandes (1) befestigt ist und wobei eine Bezugsebene auf einer Oberfläche des Laufbandes (3) angeordnet ist, das die Schritte umfasst:

   - Erzeugen eines Fluidstroms (F), der in eine Längsrichtung des Laufbandes (3) strömt,
   - Berechnen einer Fesselungsstörgröße ($\Sigma$),
   - Verrechnen der Fesselungsstörgröße ($\Sigma$) mit Messwerten, **gekennzeichnet dadurch, dass**

$$\text{sich die Fesselungsstörgröße aus } \Sigma = \frac{F_x \, z_{Radnabe}}{x_{Achsabstand}} \text{ ergibt,}$$

   wobei
   - $F_x$ einer Kraft, die von der Fluidströmung erzeugt wird, $z_{Radnabe}$ einem Abstand zwischen Bezugsebene und Radnabe des Prüfobjektes (4) sowie $x_{Achsabstand}$ einem Achsabstand des Prüfobjektes (4) entsprechen.

14. Verfahren nach Anspruch 13, **gekennzeichnet dadurch, dass** die Fesselungsstörgröße ($\Sigma$) einer gemessenen

Gewichtskraft einer Hinterachse des Prüfobjektes (4) rechnerisch hinzugefügt wird, wenn das Prüfobjekt (4) mittels einer Haltevorrichtung (5, 6) je Kraftfahrzeugrad (22) gehalten wird und ein Querverbindungselement (21) zwischen zwei benachbarten Haltevorrichtungen (5,6) derart angeordnet ist, dass eine Längsachse des Querverbindungselementes (21) in einer Querrichtung zur Fluidströmungsrichtung eine positive Steigung aufweist; oder

- die Fesselungsstörgröße (Σ) von einer gemessenen Gewichtskraft einer Vorderachse des Prüfobjektes (4) rechnerisch abgezogen wird, wenn das Prüfobjekt (4) mittels einer Haltevorrichtung (5, 6) je Kraftfahrzeugrad (22) gehalten wird und ein Querverbindungselement (21) zwischen zwei benachbarten Haltevorrichtungen (5, 6) derart angeordnet ist, dass eine Längsachse des Querverbindungselementes (21) in einer Querrichtung zur Fluidströmungsrichtung eine negative Steigung aufweist.

**Claims**

1. A holding device for a wind tunnel test stand, in particular a wind tunnel balance, said holding device comprising:

   - a holding base (5a, 6a) which can be arranged outside of a conveyor belt (3) of said wind tunnel test stand (1);
   - a support element (7) having at least two ends (7a, 7b), wherein one end (7b) is connected to said holding base (5a, 6a) and another end (7a) is connected to a wheel (22) of a test object (4) by means of a connecting element (13), and wherein said connecting element (13) decouples said support element (7) and said wheel (22) from one another in a rotational direction;

   **characterized by**
   a support device (8) which is connected to said support element (7) such that a change in a rotational orientation of said support element (7) causes a raising or lowering movement of said support device (8).

2. The holding device according to claim 1, **characterized in that** said support element (7) is connected to said holding base (5a, 6a) in such a way that a rotational orientation of said support element (7) relative to said holding base (5a, 6a) is variable, wherein the rotational orientation of said support element (7) can be changed by means of a torque and the torque can be generated/changed manually and/or mechanically.

3. The holding device according to at least one of the preceding claims, **characterized in that** said holding base (5a, 6a) comprises an orienting device for mechanically changing the rotational orientation of said support element (7) and said orienting device comprises a torque motor (18) or a lifting element (16) operated by means of an actuator (15).

4. The holding device at least one of the preceding claims, **characterized in that** said support element (7) is a shaft, in particular a torsion shaft (7") or a torsion spring (7').

5. The holding device according to at least one of the preceding claims, **characterized in that** said support device (7) comprises a lever arm element (8a) which is arranged with said support element (7) at one end and which has a vehicle receptacle (8c) at another end.

6. The holding device according to at least one of the preceding claims, **characterized in that** said support element (7) is connected to a pinion gear (12), and the pinion (12) engages with a toothed rack (24) which is connected to said support device (8).

7. The holding device according to at least one of the preceding claims, **characterized in that** said support device (8) includes a cable (8d), one end of which is connected to said support element (7) and the other end of which can be arranged on a portion of said test object (4).

8. The holding device according to at least one of the preceding claims, **characterized in that** said support device (8) includes a double lever arm, wherein a first lever arm (8) is connected to said support element (7) in a rotationally locked manner, a free end of a second lever arm (9) is connected to said test object (4), and the first and second lever arms are connected to one another by means of a joint (9a).

9. The holding device according to at least one of the preceding claims, **characterized in that** said support element (7) is configured to be telescopic.

**10.** The holding device according to at least one of the preceding claims, **characterized in that** the rotational orientation of said support element (7) can be changed manually by means of a torque wrench (17), wherein one end of said support element (7) has an adapter (14) for receiving said torque wrench (17).

**11.** A wind tunnel test stand, comprising:

- at least one holding device (5, 6) for each motor vehicle wheel (22) according to at least one of the preceding claims;
- at least one belt unit with a conveyor belt (3) wound around two rollers (25); and
- at least one weighing pad (10) for each motor vehicle wheel (22), which is arranged below said conveyor belt (3), wherein
- the holding base (5a, 6a) is fixed on a platform (2) on which the belt unit is arranged, and said platform (2) is rotatable about a z-direction.

**12.** The wind tunnel test stand according to claim 11 **characterized in that** two holding devices (5, 6), each assigned to a motor vehicle wheel (22), are arranged on each side of a test object (4), and

- a cross connection element (21) is arranged between the two support elements (7) of two adjacent holding devices (5, 6) such that it connects one end of a support element (7) to a longitudinally opposite other free end of the other support element (7).

**13.** A method for testing a motor vehicle, which is fixed above a conveyor belt (3) of a wind tunnel test stand (1) using a holding device (5, 6), wherein a reference plane is arranged on a surface of said conveyor belt (3), said method comprising the steps of:

- generating a fluid flow (F) flowing in a longitudinal direction of said conveyor belt (3);
- calculating a restraint disturbance quantity ($\Sigma$); and
- offsetting said restraint disturbance quantity $\Sigma$ against measured values,

**characterized in that**

$$\text{said restraint disturbance quantity results from } \sum = \frac{F_x z_{wheel\,hub}}{x_{wheelbase}},$$

where

- $F_x$ corresponds to a force generated by the fluid flow, $z_{wheel\,hub}$ corresponds to a distance between said reference plane and the wheel hub of said test object (4), and $x_{wheelbase}$ corresponds to a wheelbase of said test object (4).

**14.** The method according to claim 13, **characterized in that** said restraint disturbance quantity ($\Sigma$) is computationally added to a measured weight force of a rear axle of said test object (4) when said test object (4) is held by means of one holding device (5, 6) per motor vehicle wheel (22) and a cross connection element (21) is arranged between two adjacent holding devices (5, 6) in such a way that a longitudinal axis of said cross connection element (21) has a positive slope in a transverse direction with respect to the fluid flow direction; or

- said restraint disturbance quantity ($\Sigma$) is computationally subtracted from a measured weight force of a front axle of said test object (4) when said test object (4) is held by means of one holding device (5, 6) per motor vehicle wheel (22) and a cross connection element (21) is arranged between two adjacent holding devices (5, 6) in such a way that a longitudinal axis of said cross connection element (21) has a negative slope in a transverse direction with respect to the fluid flow direction.

**Revendications**

**1.** Dispositif de retenue pour un banc d'essai de soufflerie aérodynamique, en particulier pour une balance de soufflerie aérodynamique, comportant

- une base de retenue (5a, 6a) qui est susceptible d'être agencée à l'extérieur d'un tapis défilant (3) du banc d'essai de soufflerie aérodynamique (1),
- un élément porteur (7) pourvu d'au moins deux extrémités (7a, 7b), une extrémité (7b) étant reliée à la base de retenue (5a, 6a) et une autre extrémité (7a) étant susceptible d'être reliée à une roue (22) d'un objet d'essai (4) par un élément de liaison (13), et l'élément de liaison (13) découplant l'élément porteur (7) et la roue (22) l'un de l'autre dans une direction de rotation,

**caractérisé par**
un moyen de soutien (8) qui est relié à l'élément porteur (7) de telle sorte qu'une modification d'une orientation en rotation de l'élément porteur (7) provoque un mouvement de levage ou d'abaissement du moyen de soutien (8).

2. Dispositif de retenue selon la revendication 1,
**caractérisé en ce que**
l'élément porteur (7) est relié à la base de retenue (5a, 6a) de telle sorte qu'une orientation en rotation de l'élément porteur (7) par rapport à la base de retenue (5a, 6a) est variable, l'orientation en rotation de l'élément porteur (7) étant variable au moyen d'un couple de rotation et le couple de rotation pouvant être généré/varié manuellement et/ou automatiquement.

3. Dispositif de retenue selon l'une au moins des revendications précédentes, **caractérisé en ce que**
la base de retenue (5a, 6a) comprend un moyen d'orientation pour la variation automatique de l'orientation en rotation de l'élément porteur, et
le moyen d'orientation comprend un moteur couple (18) ou un élément à levier (16) actionné au moyen d'un actionneur (15).

4. Dispositif de retenue selon l'une au moins des revendications précédentes, **caractérisé en ce que**
l'élément porteur (7) est un arbre, en particulier un arbre de torsion (7") ou un ressort de torsion (7').

5. Dispositif de retenue selon l'une au moins des revendications précédentes, **caractérisé en ce que**
le moyen de soutien (8) comprend un élément à bras de levier (8a) dont une extrémité est agencée avec l'élément porteur (7) et dont l'autre extrémité présente un logement de véhicule (8c).

6. Dispositif de retenue selon l'une au moins des revendications précédentes, **caractérisé en ce que**
l'élément porteur (7) est relié à une roue dentée à pignon (12), et
le pignon (12) vient s'engager dans une crémaillère (24) qui est reliée au moyen de soutien (8).

7. Dispositif de retenue selon l'une au moins des revendications précédentes, **caractérisé en ce que**
le moyen de soutien (8) comprend un câble (8d) dont une extrémité est reliée à l'élément porteur (7) et dont l'autre extrémité est susceptible d'être agencée sur une partie de l'objet d'essai (4).

8. Dispositif de retenue selon l'une au moins des revendications précédentes, **caractérisé en ce que**
le moyen de soutien (8) comprend un bras de levier double, un premier bras de levier (8) étant relié solidairement en rotation à l'élément porteur (7), une extrémité libre du second bras de levier (9) étant reliée à l'objet d'essai (4) et le premier et le second bras de levier étant reliés l'un à l'autre au moyen d'une articulation (9a).

9. Dispositif de retenue selon l'une au moins des revendications précédentes, **caractérisé en ce que**
l'élément porteur (7) est réalisé de façon télescopique.

10. Dispositif de retenue selon l'une au moins des revendications précédentes, **caractérisé en ce que**
l'orientation en rotation de l'élément porteur (7) est variable manuellement au moyen d'une clé dynamométrique (17), une extrémité de l'élément porteur (7) comprenant un adaptateur (14) pour recevoir la clé dynamométrique (17).

11. Banc d'essai de soufflerie aérodynamique, comportant

- au moins un dispositif de retenue (5, 6) pour chaque roue de véhicule (22), selon l'une au moins des revendications précédentes,
- au moins une unité à tapis comportant un tapis défilant (3) qui est enroulé autour de deux rouleaux (25), et

- au moins un plateau de pesage (10) pour chaque roue de véhicule automobile (22), qui est agencé au-dessous du tapis défilant (3),

dans lequel

- la base de retenue (5a, 6a) est fixée sur une plateforme (2) sur laquelle est agencée l'unité à tapis, et la plateforme (2) est mobile en rotation autour d'une direction z.

**12.** Banc d'essai de soufflerie aérodynamique selon la revendication 11, **caractérisé en ce que**
deux dispositifs de retenue respectifs (5, 6) sont agencés sur chaque côté d'un objet d'essai (4), qui sont susceptibles d'être associés chacun à une roue de véhicule automobile (22), et
un élément de liaison transversale (21) est agencée entre les deux éléments porteurs (7) de deux dispositifs de retenue (5, 6) voisins, et en particulier l'élément de liaison transversale (21) est agencé de telle sorte qu'il relie une extrémité d'un élément porteur (7) à une autre extrémité libre, opposée en direction longitudinale, de l'autre élément porteur (7).

**13.** Procédé d'essai d'un véhicule automobile qui est fixé par un dispositif de retenue (5, 6) selon l'une au moins des revendications 1 à 10 au-dessus d'un tapis défilant (3) d'un banc d'essai de soufflerie aérodynamique (1), un plan de référence étant agencé sur une surface du tapis défilant (3), comprenant les étapes consistant à :

- générer un courant de fluide (F) qui s'écoule dans une direction longitudinale du tapis défilant (3),
- calculer une grandeur parasite d'arrimage ($\Sigma$),
- compenser la grandeur parasite de d'arrimage ($\Sigma$) avec des valeurs de mesure, **caractérisé en ce que**

$$\text{la grandeur parasite d'arrimage résulte de } \Sigma = \frac{F_x z \, moyeu \, de \, roue}{x \, empattement}$$

dans laquelle

- $F_x$ est une force qui est générée par l'écoulement du fluide, $z_{moyeu \, de \, roue}$ correspond à une distance entre le plan de référence et le moyeu de roue de l'objet d'essai (4) et $x_{empattement}$ correspond à un empattement de l'objet d'essai (4).

**14.** Procédé selon la revendication 13,
**caractérisé en ce que**
la grandeur parasite d'arrimage ($\Sigma$) est ajoutée par calcul à une force pondérale mesurée d'un essieu arrière de l'objet d'essai (4), lorsque l'objet d'essai (4) est retenu au moyen d'un dispositif de retenue (5, 6) par roue de véhicule automobile (22), et
un élément de liaison transversale (21) est agencé entre deux dispositifs de retenue (5, 6) voisins de telle sorte qu'un axe longitudinal de l'élément de liaison transversale (21) présente une pente positive dans une direction transversale à la direction d'écoulement de fluide ; ou

- la grandeur parasite d'arrimage ($\Sigma$) est soustraite par calcul d'une force pondérale mesurée d'un essieu avant de l'objet d'essai (4), lorsque l'objet d'essai (4) est retenu au moyen d'un dispositif de retenue (5, 6) par roue de véhicule automobile (22), et un élément de liaison transversale (21) est agencé entre deux dispositifs de retenue (5, 6) voisins de telle sorte qu'un axe longitudinal de l'élément de liaison transversale (21) présente une pente négative dans une direction transversale à la direction d'écoulement de fluide.

## Figur 1

Figur 2

EP 3 265 773 B1

Figur 3

Fig.3a

Fig.3b

Fig.3c

Figur 4

Fig.4b

Fig.4a

Figur 5

Fig.5a

Fig.5b

Fig.5c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011277560 A1
- WO 2010117793 A2
- EP 1983322 A2
- DE 112009000493 T5
- US 2014208839 A1
- JP 2006170639 A
- DE 102011085640 A1